# FASCICULE DE BREVET EUROPEEN

(11) **EP 1 448 965 B1**
(45) Date de publication et mention de la délivrance du brevet: **17.02.2010**
(21) Numéro de dépôt: 02783162.7
(22) Date de dépôt: 16.09.2002
(51) Int. Cl.: G01K 3/04

(54) **PROCEDE, SYSTEME ET COMPOSANT POUR CONTROLER LA CONSERVATION D'UN PRODUIT**
VERFAHREN, SYSTEM UND KOMPONENTE ZUR STEUERUNG DER KONSERVIERUNG EINES PRODUKTS
METHOD, SYSTEM AND COMPONENT FOR CONTROLLING PRESERVATION OF A PRODUCT

(30) Priorité: 17.09.2001 FR 0111985
(43) Date de publication de la demande: 25.08.2004
(73) Titulaire: Cryolog S.A., 44261 Nantes Cedex 2 (FR)
(72) Inventeur: Vaillant, Renaud, 94250 GENTILLY (FR)
(74) Mandataire: Larcher, Dominique
(86) Numéro de dépôt international: PCT/FR2002/003145
(87) Numéro de publication internationale: WO 2003/025529

(56) Documents cités:
- EP-A- 0 250 217
- WO-A-00/47964
- WO-A-01/64430
- DE-A- 19 912 529

## Description

### Préambule de la description

### Domaine concerné, art antérieur, problème posé

La présente invention concerne un procédé, un système et un composant pour contrôler, de manière systématique et automatique, un produit dont la conservation dans un circuit de distribution dépend de la température, notamment un produit soumis à une chaîne du froid.

Face aux besoins croissants de traçabilité des produits thermosensibles émanant notamment des acteurs des marchés de l'agroalimentaire et de la santé, une série d'opérateurs ont développé et commercialisé des indicateurs visuels de franchissement de température. Souvent désignées par l'expression « témoin de rupture de la chaîne du froid » ou encore "pastille fraîcheur ", ces solutions, présentées sous la forme d'étiquettes, n'ont pas rencontré le succès escompté notamment pour des raisons de difficulté de lecture et d'interprétation subjective de l'état des témoins.

Dans le but d'apporter une réponse aux utilisateurs quant à leur souci d'objectivité du contrôle du respect des températures de conservation, certains documents de l'art antérieur proposent alors de corréler la lisibilité d'un code à barres au respect ou au non respect des températures de conservation du produit s'y rattachant.

### Art antérieur

Les solutions de l'art antérieur, ci-après analysées, combinent l'utilisation du code à barres avec différents types d'indicateurs thermiques colorés. Ces solutions de l'art antérieur sont notamment décrites dans les documents suivants :
- WO 01 64430 A (LIFELINES TECHNOLOGY INC), publié le 7 septembre 2001 (2001-09-07), ci-après appelé le document D1,
- EP 0 250 217 A (GENERAL ELECTRIC CO PLC), publié le 23 décembre 1987 (1987-12-23), ci-après appelé le document D2,
- DE 199 12 529 A (HERBENER HEINZ GERD ; VOGELS NIKOLAUS (DE)), publié le 28 septembre 2000 (2000-09-28), ci-après appelé le document D3,
- WO 00 47964 A (TEMP TELL LIMITED ; TESTER RICHARD (GB)) 17 août 2000 (2000-08-17), ci-après appelé le document D4.

Soit les solutions de l'art antérieur imposent l'utilisation de techniques d'impression intégrant les systèmes d'indicateurs thermiques décrits. C'est le cas des documents D2 et D4 qui proposent de reproduire sur un support tout ou partie des éléments constitutifs d'un code à barres, en déposant tantôt des matériaux microencapsulés (document D2), tantôt des matériaux (lipides) thermosensibles (document D4).

Soit les solutions de l'art antérieur imposent de choisir un support d'impression des codes à barres (papier, plastique, ...) spécifiquement traité à l'aide de composants chimiques thermosensibles (document D1) ou de vernis retardant l'activation des indicateurs thermiques (document D3).

Le code à barres intègre ainsi indirectement une nouvelle information accessible au consommateur et aux professionnels : si le produit thermosensible passe avec succès l'ensemble des étapes où une lecture optique de son code à barres est effectuée (réception d'unités logistiques, passage en caisses ...), et qu'il se retrouve ainsi dans le réfrigérateur du consommateur, ce dernier a la certitude que les températures de conservation ont été jusque là respectées.

De tels procédés ont ainsi pour intérêt d'obtenir un moyen de contrôle systématique et objectif du respect des températures de conservation dans le temps.

### Problème posé

Néanmoins, les techniques et composants classiques d'impression des codes à barres sont profondément modifiés, ce qui implique l'apparition de nouvelles contraintes industrielles très fortes et largement rejetées par les utilisateurs potentiels.

Par ailleurs, l'ensemble des solutions de l'art antérieur présentent une dégradation directe et irréversible de tout ou partie des éléments constitutifs des codes à barres. Or, les informations détenues dans ces codes continuent d'être précieuses pour les professionnels et doivent pouvoir leur être accessibles postérieurement à la détection et la mise à l'écart des produits thermosensibles suspects.

La présente invention résout les problèmes ci-dessus exposés.

### Solution

### Procédé

L'invention concerne un procédé pour contrôler, de manière systématique et automatique, un produit dont la conservation dans un circuit de distribution dépend de la température, notamment un produit soumis à une chaîne du froid.

Le procédé selon l'invention comprend les étapes suivantes :
- l'étape d'apposer, sur le produit, un marqueur comportant des éléments, notamment les barres d'un code-barres, destinés à être reconnus par des automates gérant la circulation du produit entre les acteurs économiques concernés, notamment entre un distributeur et un consommateur ou entre un laboratoire pharmaceutique et un hôpital,
- l'étape de fixer un composant sur le produit.
le composant comporte au moins une partie comprenant des moyens de masquage destinés à masquer, au moins temporairement, sans les modifier, les éléments du marqueur lorsque (i) la température du produit franchit un seuil de température déterminée ou (ii) lorsque les conditions de conservation s'écartent d'un niveau de référence déterminé, notamment caractérisé par le franchissement d'un seuil de température déterminée pendant une durée supérieure à une durée déterminée, ou par le franchissement d'une durée de conservation déterminée.

Il résulte de la combinaison des traits techniques que dans les circonstances ci-dessus mentionnées :
- les automates ne peuvent plus lire les marqueurs,
- en revanche, un organisme de contrôle peut décider de rendre à nouveau lisible les marqueurs.

De préférence, selon l'invention, le procédé est tel que la partie du composant permettant de masquer au moins temporairement les éléments du marqueur est réalisé sous une forme amovible. Ainsi, en cas de masquage du marqueur l'organisme de contrôle peut décider de retirer la partie amovible du composant afin de rendre à nouveau lisible les marqueurs.

De préférence, selon l'invention le procédé est tel que le composant comporte une partie fixée de manière irréversible sur le produit. La partie fixée de manière irréversible comporte un témoin des modifications des conditions de conservation, notamment un témoin de rupture de la chaîne du froid. Il résulte de la combinaison des traits techniques qu'en cas de modification des conditions de conservation les produits concernés peuvent être identifiés sans contestation possible.

De préférence, selon une première variante de réalisation de l'invention le procédé est tel que, pour masquer les éléments du marqueur, on diffuse au dessus du marqueur, via une réaction physico-chimique migrante, une première substance destinée à faire écran entre le marqueur et les automates.

De préférence, selon une seconde variante de réalisation de l'invention le procédé est tel que, pour masquer les éléments du marqueur, on modifie, via un développement contrôlé d'une population de micro-organismes au dessus du marqueur, une propriété optique d'une seconde substance destinée à faire écran entre le marqueur et les automates.

La population de micro-organismes est placée sur un support de culture. le développement contrôlé de la population de micro-organismes comprend un processus d'activation. Ainsi, lorsque le processus d'activation est désactivé, la manutention à température ambiante de la seconde substance n'induit pas le développement contrôlé de la population de micro-organismes.

De préférence, dans le cas de cette seconde variante de réalisation de l'invention, le procédé comprend en outre l'étape d'inhiber le développement de la population de micro-organismes. Le développement de la population de micro-organismes est inhibé pendant les phases de manutention du support de culture. le procédé comprend en outre l'étape de désinhiber la population de micro-organismes lors de la mise en circulation du produit dans le circuit de distribution, notamment dans la chaîne du froid. Ainsi, le développement de la population de micro-organismes devient possible.

De préférence, dans le cas de cette seconde variante de réalisation de l'invention, le procédé est tel que :
- pour inhiber la population de micro-organismes, on la déshydrate,
- pour désinhiber la population de micro-organismes, on la réhydrate.

De préférence, selon une autre variante de réalisation de l'invention, le procédé comprend en outre l'étape de placer la population de micro-organismes sur un support de culture dans un milieu de pH, notamment acide, inhibant le développement de la population de micro-organismes. Ainsi, le développement de la population de micro-organismes est inhibé pendant les phases de manutention du support de culture.

le procédé comprend en outre l'étape d'ajuster le pH du milieu, notamment par libération d'eau, lors de son apposition sur le marqueur. Il résulte de la combinaison des traits techniques que le développement de la population de micro-organismes devient possible.

### Système

L'invention concerne également un système pour contrôler, de manière systématique et automatique, un produit dont la conservation dans un circuit de distribution dépend de la température, notamment un produit soumis à une chaîne du froid.
le système comprend :
- un marqueur, apposé sur le produit, comportant des éléments, notamment les barres d'un code-barres, destinés à être reconnus par des automates gérant la circulation du produit entre les acteurs économiques concernés, notamment entre un distributeur et un consommateur ou entre un laboratoire pharmaceutique et un hôpital,
- un composant,
- des moyens de fixation pour fixer le composant sur le produit à l'emplacement du marqueur.
le composant comporte au moins une partie comprenant des moyens de masquage destinés à masquer, au moins temporairement, sans les modifier, les éléments du marqueur lorsque (i) la température du produit franchit un seuil de température déterminée ou (ii) lorsque les conditions de conservation s'écartent d'un niveau de référence déterminé, notamment caractérisé par le franchissement d'un seuil de température déterminée pendant une durée supérieure à une durée déterminée ou par le franchissement d'une durée de conservation déterminée.

Il résulte de la combinaison des traits techniques que, dans les circonstances ci-dessus mentionnées, les automates ne peuvent plus lire les marqueurs. En revanche, un organisme de contrôle peut décider de rendre à nouveau lisible les marqueurs.

De préférence, selon l'invention le système est tel que les moyens de fixation fixent de manière amovible sur le produit la partie du composant permettant de masquer au moins temporairement les éléments du marqueur. Ainsi, en cas de masquage du marqueur, l'organisme de contrôle peut décider de retirer la partie amovible du composant afin de rendre à nouveau lisible les marqueurs.

De préférence, selon l'invention, le système est tel que le composant comporte une partie fixée de manière irréversible sur le produit. la partie fixée de manière irréversible comporte un témoin des modifications des conditions de conservation, notamment un témoin de rupture de la chaîne du froid. Il résulte de la combinaison des traits techniques qu'en cas de modification des conditions de conservation les produits concernés peuvent être identifiés sans contestation possible.

De préférence, selon une première variante de réalisation de l'invention, le système est tel que les moyens de masquage diffusent au dessus du marqueur, via une réaction physico-chimique migrante, une première substance destinée à faire écran entre le marqueur et les automates.

De préférence, selon une deuxième variante de réalisation de l'invention, le système est tel que les moyens de masquage modifient, via un développement contrôlé d'une population de micro-organismes au dessus du marqueur, une propriété optique d'une seconde substance destinée à faire écran entre le marqueur et les automates. le développement contrôlé de la population de micro-organismes comprend un processus d'activation. Ainsi, lorsque le processus d'activation est désactivé, la manutention à température ambiante de la seconde substance n'induit pas le développement contrôlé de la population de micro-organismes.

De préférence, dans le cas de cette seconde variante de réalisation de l'invention, la population de micro-organismes est placée sur un support de culture. le système comprend en outre des moyens d'inhibition pour inhiber le développement de la population de micro-organismes sur le support de culture. Ainsi, le développement de la population de micro-organismes est inhibé pendant les phases de manutention à température ambiante du support de culture. le système comprend en outre des moyens de désinhibition pour désinhiber la population de micro-organismes lors de la mise en circulation du produit dans le circuit de distribution, notamment dans la chaîne du froid. Ainsi, le développement de la population de micro-organismes devient possible.

De préférence, selon l'invention, le système est tel que :
- les moyens d'inhibition pour inhiber la population de micro-organismes, comprennent des moyens de déshydratation,
- des moyens de désinhibition pour désinhiber la population de micro-organismes, comprennent des moyens de réhydratation.

De préférence, selon l'invention, la population de micro-organismes est placée sur un support de culture. le support de culture est situé dans une poche étanche. la poche contenant un milieu de culture. le pH du milieu de culture est choisi de manière appropriée, notamment acide, pour inhiber le développement de la population de micro-organismes. Ainsi, le développement de la population de micro-organismes est inhibé pendant les phases de manutention du support de culture.

Les moyens de masquage comprennent en outre des moyens d'ajustement pour ajuster le pH du milieu, notamment par libération d'eau. Les moyens d'ajustement du pH se présentent notamment sous la forme d'une capsule perforable, contenant de l'eau, située à l'intérieur de la poche. Ainsi, le développement de la population de micro-organismes devient possible après fixation dudit composant sur ledit produit à l'emplacement du marqueur.

### Composant

L'invention concerne également un composant destiné à contrôler, de manière systématique et automatique, un produit dont la conservation dans un circuit de distribution dépend de la température, notamment un produit soumis à une chaîne du froid.

Un marqueur a été apposé sur le produit. le marqueur comporte des éléments, notamment les barres d'un code-barres, destinés à être reconnus par des automates gérant la circulation du produit entre les acteurs économiques concernés, notamment entre un distributeur et un consommateur ou entre un laboratoire pharmaceutique et un hôpital.

Le composant comprend des moyens de fixation pour fixer le composant sur le produit à l'emplacement du marqueur. Au moins une partie du composant comprend des moyens de masquage destinés à masquer, au moins temporairement, sans les modifier, les éléments du marqueur lorsque (i) la température du produit franchit un seuil de température déterminée ou (ii) lorsque les conditions de conservation s'écartent d'un niveau de référence déterminé, notamment caractérisé par le franchissement d'un seuil de température déterminée pendant une durée supérieure à une durée déterminée ou par le franchissement d'une durée de conservation déterminée.

Il résulte de la combinaison des traits techniques que dans les circonstances ci-dessus mentionnées les automates ne peuvent plus lire les marqueurs. En revanche, un organisme de contrôle peut décider de rendre à nouveau lisible les marqueurs.

De préférence, selon l'invention, le composant est tel que les moyens de fixation fixent de manière amovible sur le produit la partie du composant permettant de masquer au moins temporairement les éléments du marqueur. Ainsi, en cas de masquage du marqueur, l'organisme de contrôle peut décider de retirer la partie amovible du composant afin de rendre à nouveau lisible les marqueurs.

De préférence, selon l'invention, le composant comporte une partie fixée de manière irréversible sur le produit. la partie fixée de manière irréversible comporte un témoin des modifications des conditions de conservation, notamment un témoin de rupture de la chaîne du froid. Il résulte de la combinaison des traits techniques qu'en cas de modification des conditions de conservation les produits concernés peuvent être identifiés sans contestation possible.

De préférence, selon une première variante de réalisation de l'invention, le composant est tel que les moyens de masquage diffusent au dessus du marqueur, via une réaction physico-chimique migrante, une première substance destinée à faire écran entre le marqueur et les automates.

De préférence, selon une deuxième variante de réalisation de l'invention, le composant est tel que les moyens de masquage modifient, via un développement contrôlé d'une population de micro-organismes au dessus du marqueur, une propriété optique d'une seconde substance destinée à faire écran entre le marqueur et les automates. le développement contrôlé de la population de micro-organismes comprend un processus d'activation. Ainsi, lorsque le processus d'activation est désactivé, la manutention à température ambiante de la seconde substance n'induit pas le développement contrôlé de la population de micro-organismes.

De préférence dans le cas de cette seconde variante de réalisation selon l'invention, le composant comprend en outre des moyens d'inhibition pour inhiber le développement de la population de micro-organismes placée sur un support de culture. Il résulte de la combinaison des traits techniques que le développement de la population de micro-organismes est inhibé pendant les phases de manutention à température ambiante du support de culture. le composant comprend en outre des moyens de désinhibition pour désinhiber la population de micro-organismes lors de la mise en circulation du produit dans le circuit de distribution, notamment dans la chaîne du froid. Ainsi, le développement de la population de micro-organismes devient possible.

De préférence, selon l'invention, le composant est tel que :
- les moyens d'inhibition pour inhiber la population de micro-organismes, comprennent des moyens de déshydratation,
- les moyens de désinhibition pour désinhiber la population de micro-organismes, comprennent des moyens de réhydratation.

De préférence, selon l'invention, la population de micro-organismes est placée sur un support de culture. le support de culture est situé dans une poche étanche. la poche contenant un milieu de culture. le pH du milieu de culture est choisi de manière appropriée, notamment acide, pour inhiber le développement de la population de micro-organismes. Ainsi, le développement de la population de micro-organismes est inhibé pendant les phases de manutention du support de culture. Les moyens de masquage comprennent en outre des moyens d'ajustement pour ajuster le pH du milieu, notamment par libération d'eau. Les moyens d'ajustement du pH se présentent notamment sous la forme d'une capsule perforable, contenant de l'eau, située à l'intérieur de la poche. Ainsi, le développement de la population de micro-organismes devient possible après fixation dudit composant sur ledit produit à l'emplacement du marqueur.

### Description détaillé

D'autres caractéristiques et avantages de l'invention apparaîtront à la lecture de la description de variantes de réalisation de l'invention données à titre d'exemple indicatif et non limitatif, et de la
- figure 1 qui représente, de manière schématique la circulation d'un produit dans le cas particulier de la mise en oeuvre d'une chaîne du froid,
- la figure 2 qui représente, de manière schématique, un produit soumis à une chaîne du froid et comportant un marqueur destiné notamment à activer des automates gérant la circulation du produit,
- la figure 3 qui représente, de manière schématique, une première variante de réalisation des moyens de masquage destinés à masquer le marqueur 3 en cas de rupture d'une chaîne du froid,
- la figure 4 qui représente, de manière schématique, une seconde variante de réalisation des moyens de masquage destinés à masquer le marqueur 3 en cas de rupture d'une chaîne du froid,
- les figures 5a, 5b, 5c et 6a, 6b qui représentent, de manière schématique, le masquage du marqueur dans le cas de la première et de la seconde variante de réalisation des moyens de désactivation,
- la figure 7 qui représente un composant comportant une partie de masquage amovible.

D'une manière générale le système selon l'invention a pour objet de permettre de contrôler, de manière systématique et automatique, un produit 1 dont la conservation dans un circuit de distribution 2 dépend de la température 51.

Dans ce cas et dans une première série d'applications, le système peut prendre la forme d'un Intégrateur Temps Température et mettre ainsi en évidence aussi bien une accumulation critique d'élévations anormales de température par rapport à ladite température de référence, qu'une accumulation critique d'abaissements anormaux de température.

Par exemple, une application du système permet de mettre en évidence les mauvaises conditions de conservations d'un produit surgelé devant normalement être conservé à - 18° C. Les produits surgelés n'ont pas de date limite de conservation, par conséquent seul les dépassements de température peuvent altérer la qualité des produits. Le risque d'accumulation critique de ruptures de la chaîne du froid est d'autant plus important que le produit passe entre les mains d'un grand nombre d'intermédiaire avant d'arriver dans le congélateur du consommateur final.

Par exemple, en agroalimentaire, les plats conservés à chaud sont maintenus à une température supérieure à 63°C jusqu'au moment de la consommation. Une application du système permet de mettre en évidence les accumulations d'exposition du produit à des températures inférieures à la température préconisée de 63°C.

Dans ce cas et dans une deuxième série d'applications, le système peut prendre la forme d'un indicateur de dépassement de seuil et mettre cette fois-ci en évidence le franchissement de ladite température de référence vers des températures inférieures ou supérieures suivant la configuration.

Par exemple, certains produits ont besoin d'être stérilisés et sont donc portés à très hautes températures. Certains types de laits par exemple pour pouvoir être commercialisés doivent être chauffés à plus de 140° C (lait Ultra Haute Température). Une application du système a pour objectif de contrôler que ladite température de 140 ° C a bien été atteinte à un moment donné.

Par exemple, en dessous de -4°C, il se forme dans les bouteilles de vin des dépôts de tartre, dus à la précipitation des sels de l'acide tartrique, peu appréciés par le consommateur car ils sont assimilés à des défauts. Une application du système permet de mettre en évidence instantanément ces baisses de température, dès le franchissement de ladite température de référence.

Le système peut être configuré à la fois suivant une température de référence et suivant la durée de vie du produit.

Dans ce second cas, le système répercute les mauvaises conditions de conservations sur la durée de vie du produit. Si la température de référence n'est pas franchie, le système a un comportement dans le temps identique au processus normal de dégradation du produit.

Par exemple, certains produits, notamment les produits frais, ont une Date de Péremption, au-delà de laquelle le produit n'est plus consommable même si les conditions de conservation ont été correctement respectées. En revanche, si des ruptures de chaîne du froid sont enregistrées, la Date de Péremption est d'autant plus avancée (raccourcie) que les ruptures de chaînes du froid sont longues et se font à des températures élevées. L'étiquette peut simuler ce fonctionnement : elle a un mécanisme de dégradation normal tant que les conditions de conservation sont respectées et elle voit son mécanisme de dégradation accéléré si la température dépasse la température de conservation préconisée, ce qui conduira, au bout de la phase de dégradation au masquage du marqueur avant la date de péremption théorique.

Par exemple, certains produits sur la marché de l'agroalimentaire doivent être conservés en dessous de 4° C depuis leur sortie d'usine jusqu'au foyer du consommateur final, en passant par les transporteurs et le distributeur. Le dépassement accidentel de cette température de référence au cours d'une de ces étapes ne rend pas obligatoirement un produit impropre à la consommation, mais diminue la durée pendant laquelle le produit est consommable. L'accumulation de ces dépassements dans le temps doit être contrôlée.

Le système selon l'invention sera décrit dans le cas particulier d'un produit 1 soumis à une chaîne du froid.

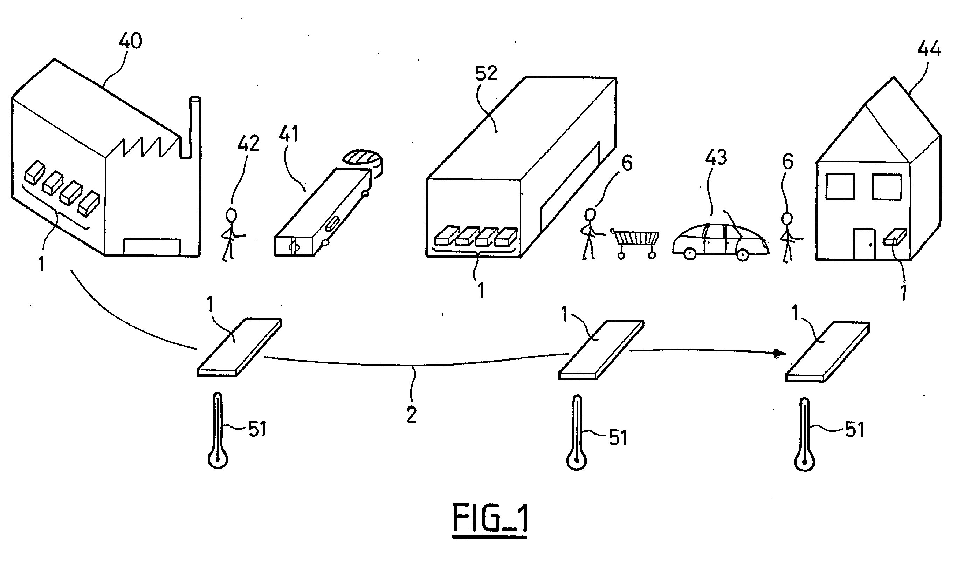

Sur la figure 1, on a représenté, de manière schématique la circulation de produits 1 mettant en oeuvre une chaîne du froid. Les produits 1 sont fabriqués et maintenus en deçà d'une température déterminée dans une usine 40, appartenant à un industriel 42, puis sont acheminés, au moyen d'un camion frigorifique 41, chez un distributeur 52. Un consommateur 6 fait l'acquisition des produits 1 en se rendant au rayon frais du distributeur 52. Le consommateur transporte les produits 1 jusqu'à son domicile 44 au moyen d'un véhicule de tourisme 43 lui appartenant. Une rupture de la chaîne du froid est ainsi susceptible de se produire à tout moment, depuis le stade de la fabrication des produits 1 jusqu'au stade de leur consommation par le consommateur, notamment en raison d'une panne d'appareils réfrigérants ou encore suite à une négligence d'un consommateur 6 qui, par exemple, tarderait à stocker les produits 1 dans un réfrigérateur. Il apparaît donc nécessaire de pouvoir effectuer un contrôle des produits 1 à chaque étape de leur circulation. Ce contrôle a pour objet de détecter, de manière systématique et automatique, un produit 1 ayant subi une rupture de la chaîne du froid.

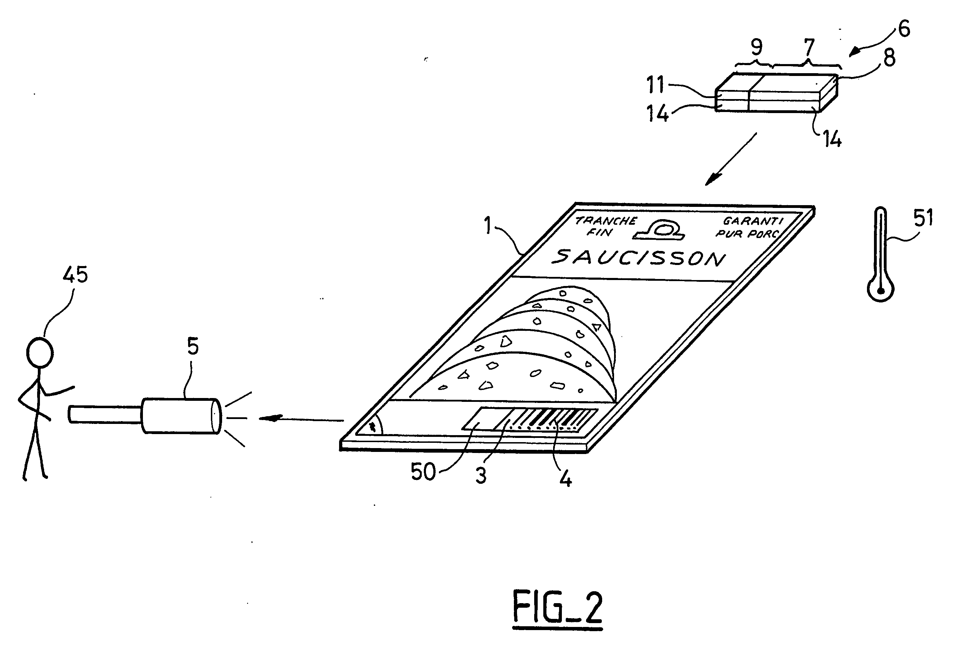

Sur la figure 2, on a représenté, de manière schématique, un produit 1, mettant en oeuvre une chaîne du froid, telle que celle représentée sur la figure 1. Le produit 1, qui prend ici la forme d'une barquette contenant des tranches de saucisson, comporte un marqueur 3 destiné à activer un automate 5 de type infra-rouge. Ainsi qu'on l'a représenté, le marqueur 3 est constitué, de manière connue en soi, d'un code à barres 3 comportant des éléments 4, notamment les barres 4 du code à barres 3. Ces barres sont destinées à être reconnues par l'automate 5. Il pourrait néanmoins s'agir d'un autre type de marqueur 3, notamment d'un marqueur 3 électronique ou magnétique. Des moyens d'apposition, par exemple des moyens d'impression, sont utilisés pour apposer, sur le produit 1, le marqueur 3. L'automate 5 prend, sur la figure 2, la forme, connue en soi, d'un pointeur infrarouge utilisé par une caissière 45 d'un supermarché pour enregistrer et facturer à un consommateur le produit 1.

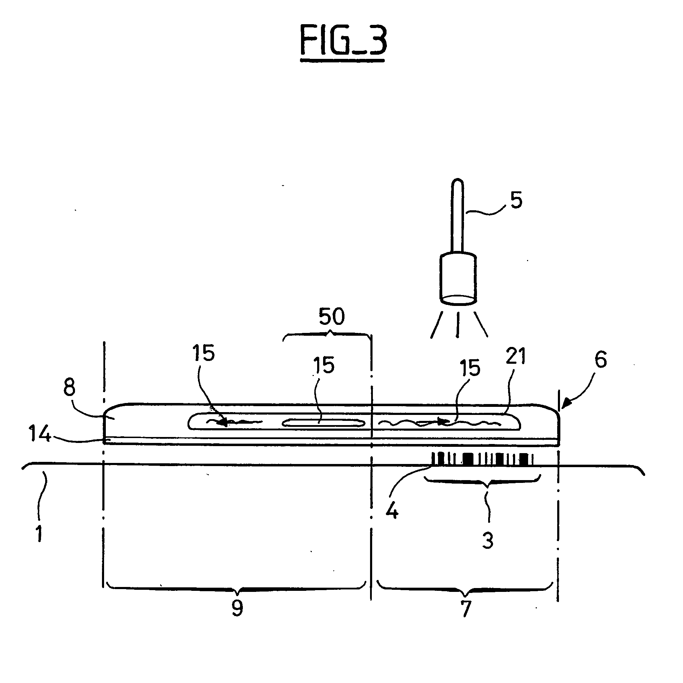

Un composant 6 comprend, sur une partie 7 dédiée à cet effet, des moyens de masquage 8 permettant de masquer, au moins temporairement, sans les modifier, les éléments 4 du marqueur 3 lorsque la température du produit 1 franchit un seuil de température déterminée. On décrira ci-après, notamment en se référant aux figures 3 à 6, des variantes de réalisation du composant 6 et des moyens de masquage 8.

Par exemple, dans le cas d'un marqueur du type électromagnétique, la circulation du produit est liée à la compréhension d'un signal émis par le marqueur. L'élément de masquage peut être conçu de manière à masquer le signal émis en émettant un autre signal de même nature qui va parasiter le signal du marqueur. L'élément de masquage empêche ainsi l'identification du produit.

Des moyens de fixation 14, permettent de fixer le composant 6 sur le produit 1 à l'emplacement du marqueur 3.

Dans le cas des variantes de réalisation représentées sur les figures 2 à 6, les moyens de fixation 14 fixent de manière amovible sur le produit 1 la partie 7 du composant 6 permettant de masquer au moins temporairement les éléments 4 du marqueur 3. Ainsi, en cas de masquage du marqueur 3 l'organisme de contrôle peut décider de retirer la partie 7 amovible du composant 6 afin de rendre à nouveau lisible les marqueurs 3.

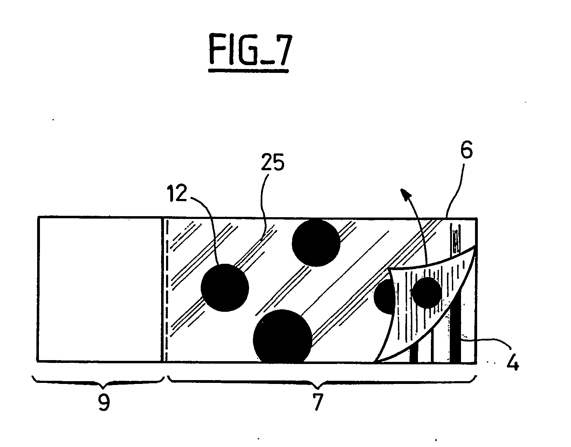

A cette fin, on peut par exemple recouvrir un code à barres d'un composant du type Intégrateur Temps Température constitué d'un support transparent adhésif intégrant une pellicule détachable 25 initialement transparente (voir figure 7). Passé une accumulation critique de dépassement de température dans le temps, la pellicule transparente recouvrant le code à barres va s'opacifier, ainsi qu'il est décrit ci-après. La pellicule recouvrant le code à barres va cesser d'être transparente et va faire écran entre les barres et le faisceau optique de lecture. Le code à barres est masqué et sa lecture est ainsi rendue impossible, tant que ladite pellicule ainsi opacifiée n'est pas séparée du support. Cette séparation est rendue possible grâce à l'utilisation de colles spéciales dont le pouvoir adhésif aura été défini pour permettre le détachement, par pelage, de la pellicule du support transparent recouvrant le code à barres. Une fois la pellicule 25 détachée, les informations véhiculées dans le code à barres sont à nouveau déchiffrables (voir figure 7). Le code à barres n'a en aucun cas été modifié, altéré ou détruit.

On peut aussi, par exemple recouvrir le code à barres d'un Intégrateur Temps Température constitué uniquement d'une pellicule détachable directement apposée sur l'emballage. Dans ce cas, il n'est pas nécessaire de prévoir un support transparent.

On peut aussi, par exemple utiliser une colle à fort pouvoir adhésif pour fixer le composant, de sorte que le composant ne puisse pas être décollé sans altérer l'emballage du produit. Dans ce cas, pour permettre la lecture du code à barres, après masquage de celui-ci par le composant on peut utiliser des moyens de traitement spécifiques (notamment des moyens électriques, magnétiques, chimiques ou encore mécaniques) pour rendre à nouveau transparent le composant. Ces moyens sont conçus pour annihiler les effets des éléments de masquage du composant (notamment en modifiant leurs caractéristiques chimiques ou physiques). Le code à barres n'a en aucun cas été modifié, altéré ou détruit.

Dans le cas des variantes de réalisation représentées sur les figures 2 à 6, le composant 6 comporte une partie fixe 9 fixée de manière irréversible par des moyens de fixation appropriés sur le produit 1. la partie fixe 9 fixée de manière irréversible comporte un témoin 10 des modifications des conditions de conservation, notamment un témoin 10 de rupture de la chaîne du froid. Ainsi, en cas de modification des conditions de conservation les produits 1 concernés peuvent être identifiés sans contestation possible.

Le témoin situé sur la partie fixe scellée délivre un message au consommateur final et au distributeur.

Pour le consommateur final, c'est la garantie que le système n'a été falsifié par aucun intervenant avant lui. En effet, le pouvoir adhésif des colles utilisées pour sceller la partie fixe entraîne une dégradation direct et visible de l'emballage ou du produit en cas de tentative de décollage.

Pour le distributeur, c'est la garantie qu'un consommateur malveillant ne pourra pas remplacer un témoin vierge par un témoin altéré pour tenter d'apporter la preuve de la mauvaise qualité d'un produit, alors que ce produit n'est toujours pas sorti du magasin. C'est aussi la garantie qu'un transporteur ne pourra pas dissimuler une rupture de la chaîne du froid

Enfin, le caractère dissociable de la partie amovible et de la partie fixe permet au système de s'adapter à l'architecture graphique de l'emballage : la partie fixe doit être placée à un endroit visible pour le consommateur alors que la zone accueillant la partie amovible coïncide avec l'emplacement du marqueur. Or ce dernier est souvent imprimé de façon discrète sur l'emballage.

On notera que d'une manière générale le système selon l'invention comprend :
- un marqueur 3, apposé sur le produit 1, comportant des éléments 4, notamment les barres 4 d'un code à barres 3, destinés à être reconnus par des automates 5 gérant la circulation du produit 1 entre les acteurs économiques concernés, notamment entre un distributeur et un consommateur ou entre un laboratoire pharmaceutique et un hôpital,
- un composant 6,
- des moyens de fixation 14 pour fixer le composant 6 sur le produit 1 à l'emplacement du marqueur 3.
le composant 6 comporte au moins une partie 7 comprenant des moyens de masquage 8 destinés à masquer, au moins temporairement, sans les modifier, les éléments 4 du marqueur 3 lorsque (i) la température du produit 1 franchit un seuil de température déterminée ou (ii) lorsque les conditions de conservation s'écartent d'un niveau de référence déterminé, notamment caractérisé par le franchissement d'un seuil de température déterminée pendant une durée supérieure à une durée déterminée.

Il résulte de la combinaison des traits techniques que dans ces circonstances les automates 5 ne peuvent plus lire les marqueurs 3. En revanche, un organisme de contrôle peut décider de rendre à nouveau lisible les marqueurs 3.

On va maintenant décrire, en se référant à la figure 3, une première variante de réalisation du composant 6 et des moyens de masquage 8 destinés à masquer le marqueur 3 en cas de rupture de la chaîne du froid dans un circuit de distribution 2. Les moyens de masquage 8 comprennent une poche plate étanche 21 contenant des réactifs physico-chimiques. En cas de rupture de la chaîne du froid , c'est-à-dire lorsque la température déterminée est franchie, les réactifs physico-chimiques diffusent, à l'intérieur de la poche plate étanche 21, via une réaction physico-chimique migrante 15, une première substance 11 formant un écran à la surface du marqueur 3. Ainsi, lorsque la température déterminée est franchie, la première substance 11 forme progressivement un écran entre le marqueur 3 et l'automate 5. L'automate 5 est alors désactivé. La rupture de la chaîne du froid est donc détectée. Ainsi que le montre la figure 3, la réaction physico-chimique 15 migre à partir d'une zone 50 qui ne recouvre pas les éléments 4 du marqueur 3, ce n'est donc qu'au bout d'un certain temps que les éléments 4 du marqueur 3 cessent d'être lisibles.

On a exposé ci-dessus que le système selon l'invention doit être configuré :
- soit suivant une température de référence ne permettant de mettre en évidence que les mauvaises conditions de conservations,
- soit, à la fois, suivant une température de référence et suivant la durée de vie du produit.

Le caractère migrant de la réaction et l'existence d'une zone d'alerte 50 « vierge » permettent d'atteindre ces objectifs. En effet, la température agit sur la viscosité dont dépend la vitesse de migration du masque vers le code à barres. Par conséquent, le temps que mettra le masque pour occulter, de manière binaire « tout ou rien », le code à barres est fonction de l'étendue de la zone d'alerte 50, de la température et de la durée d'exposition aux températures critiques. Il est possible de prédéterminer les réactifs de la réaction migrante et l'étendue de la zone d'alerte 50 de manière à réaliser des composants (Intégrateurs - Temps - Température) révélant les écarts par rapports aux conditions de conservation requises (l'état de fraîcheur) pour un produit donné dans un circuit de distribution donné.

Le caractère migrant de la réaction physico-chimique permet un masquage progressif en évitant que le code à barres ne soit rendu illisible prématurément alors que le produit concerné est encore consommable. L'objectif est de réduire le risque de mise à l'écart de la chaîne de produits thermosensibles pourtant consommables. L'utilisation d'une réaction chimique non migrante peut avoir comme conséquence le masquage prématuré du marqueur et le retrait du produit de la chaîne de distribution lors du passage devant les automates.

Un autre avantage de la mise en oeuvre d'une réaction physico chimique migrante est de permettre de retracer un historique des variations de la température en fonction du temps. En effet, un découpage de la zone d'alerte 50 précédant la zone du code à barres en plusieurs paliers imprimés permet de suivre précisément la migration et d'interpréter le stade de progression du masque en le corrélant à l'état de fraîcheur du produit.

Une fois l'ensemble des paliers imprimés franchis et le seuil critique d'accumulation de ruptures de la chaîne du froid atteint, la réaction physico-chimique migre vers le code à barre, le rendant quasi instantanément illisible.

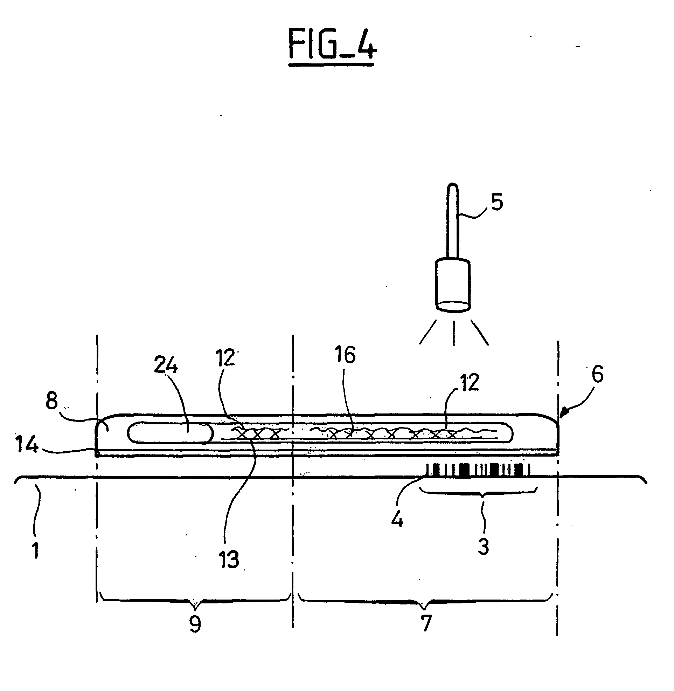

On va maintenant décrire, en se référant à la figure 4, une deuxième variante de réalisation du composant 6 et des moyens de masquage 8 destinés à masquer le marqueur 3 en cas de rupture de la chaîne du froid dans un circuit de distribution 2. De même que dans le cas de la variante de réalisation représentée sur la figure 3, les moyens de masquage 8 comprennent une poche plate étanche. Cette poche plate étanche est également référencée 21 dans le cas de cette variante de réalisation. La poche plate étanche, 21 contient un support de culture 13 sur lequel est placée une population de micro-organismes 16. La population de micro-organismes 16 se développant de manière contrôlée lorsque la température déterminée est franchie. Le développement contrôlé de la population de micro-organismes 16 produit un agent réactif qui réagit avec le milieu 22 en modifiant une propriété optique d'une seconde substance 12. Dans le cas de la variante de réalisation décrite en se référant à la figure 4 cette seconde substance 12 est constituée par le milieu 22 proprement dit. Dans le cas d'autres variantes de réalisation cette seconde substance 12, contenue dans la poche plate étanche 21, peut-être distincte du milieu 22. La seconde substance 12 forme un écran à la surface du marqueur 3. Ainsi, lorsque la température déterminée est franchie, la seconde substance 12 forme un écran entre le marqueur 3 et l'automate 5. L'automate 5 est alors désactivé. La rupture de la chaîne du froid est donc détectée.

On a exposé ci-dessus que le système selon l'invention doit être configuré :
- soit suivant une température de référence ne permettant de mettre en évidence que les mauvaises conditions de conservations,
- soit, à la fois, suivant une température de référence et suivant la durée de vie du produit.

Le développement contrôlé d'une population de micro - organismes permet d'atteindre ces objectifs. En effet, la température agit sur la vitesse de développement des micro - organismes et donc joue sur la vitesse de production de l'agent réactif. Lorsqu'une quantité suffisante d'agent réactif est produite, elle réagit avec le milieu 22, pour en modifier la couleur de manière relativement rapide (par rapport au temps nécessaire pour produire l'agent réactif). La modification de la couleur du milieu s'effectue en quelques heures. Par conséquent, le temps que mettra le masque pour occulter, de manière binaire « tout ou rien », le code à barres est fonction de la température et de la durée d'exposition aux températures critiques. Il est possible de prédéterminer le choix des micro-organismes, leur quantité, la nature de la seconde substance 12 (dans le cas décrit, la nature du milieu 22) de manière à réaliser des composants (Intégrateurs - Temps - Température) révélant les écarts par rapports aux conditions de conservation requises (l'état de fraîcheur) pour un produit donné dans un circuit de distribution donné.

Le caractère quasi-instantané du changement de couleur du milieu permet de révéler avec précision le moment où le produit cesse d'être consommable. De plus, le fait que le changement de couleur survienne après une phase de développement des micro-organismes, évite que le code à barres ne soit rendu illisible prématurément alors que le produit concerné est encore consommable.

L'objectif est de réduire le risque de mise à l'écart de la chaîne de produits thermosensibles pourtant consommables.

Le composant 6 comprend des moyens de désactivation du développement contrôlé de la population de micro-organismes 16. Ces moyens de désactivation seront décrits ci-après. Ainsi, lorsque le processus de développement contrôlé est désactivé la manutention, à température ambiante du composant 6 entre le moment où il est fabriqué et celui où il est fixé sur le produit 1, n'induit pas le développement contrôlé de la population de micro-organismes 16.

Afin de désactiver le développement contrôlé de la population de micro-organismes 16, plusieurs variantes de réalisation sont possibles.

Dans le cas d'une première variante de réalisation :
- D'une part, le système comprend des moyens d'inhibition pour inhiber le développement de la population de micro-organismes 1. Par exemple, les moyens d'inhibition peuvent comprendre, à cet effet, des moyens de déshydratation. La population de micro-organismes 16 est placée à l'état déshydraté sur le support de culture 13. En effet, à l'état déshydraté les micro-organismes 16 ne prolifèrent pas. Ainsi, le développement de la population de micro-organismes 16 est inhibé pendant les phases de manutention à température ambiante du support de culture 13.
- D'autre part, le composant 6 comprend des moyens de désinhibition pour désinhiber la population de micro-organismes 16 lors de la mise en circulation du produit 1 dans le circuit de distribution 2, notamment dans la chaîne du froid. Par exemple, à cet effet, les moyens de désinhibition pour désinhiber la population de micro-organismes 16 peuvent comprendre des moyens de réhydratation des micro-organismes 16 et/ou du milieu de culture des micro-organismes 16 et/ou du support de culture 13. Ainsi, le développement de la population de micro-organismes 16 devient possible. Les moyens de réhydratation se présentent notamment sous la forme d'une capsule perforable 24 contenant de l'eau, située à l'intérieur de la poche plate étanche 21. Les moyens de réhydratation sont actionnés, la capsule perforable 24 est perforée, lors de la mise en oeuvre des moyens de fixation 14 du composant 6 sur le produit 1. Ainsi, le développement de la population de micro-organismes 16 devient possible dès lors que la capsule 24 est perforée, après fixation du composant 6 sur le produit 1.

Dans le cas d'une deuxième variante de réalisation, la population de micro-organismes 16 est placée sur un support de culture 13. Le support de culture 13 est situé dans une poche étanche 21. La poche étanche 21 contient un milieu de culture 22 (qui, on l'a vu, peut être la seconde substance 12). Le pH du milieu de culture 22 est choisi de manière appropriée, notamment acide, pour inhiber le développement de ladite population de micro-organismes 16. Ainsi, le développement de la population de micro-organismes 16 est inhibé pendant les phases de manutention dudit support de culture 13. Les moyens de masquage 8 comprennent en outre des moyens d'ajustement pour ajuster le pH du milieu, notamment par libération d'eau, lors de la fixation du composant 6 sur ledit marqueur 3. Les moyens d'ajustement dudit pH se présentent dans le cas de la variante décrite sous la forme d'une capsule perforable 24, contenant de l'eau, située à l'intérieur de ladite poche étanche 21. Ainsi, le développement de la population de micro-organismes 16 devient possible après la fixation du composant 6 sur ledit produit 1 à l'emplacement du marqueur 3 et la perforation de la capsule perforable 24.

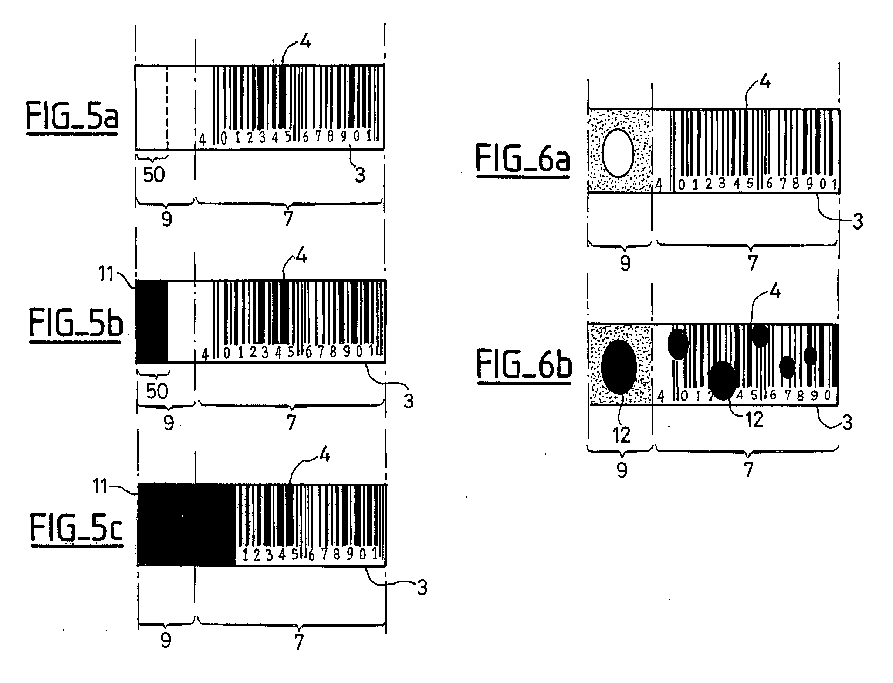

Sur les figures 5a, 5b, 5c et 6a, 6b, on a représenté, de manière schématique, le masquage du marqueur 3 dans le cas de la première et de la seconde variante de réalisation du composant 6, respectivement représentées sur la figure 3 et sur la figure 4.

Sur les figures 5a, 5b, 5c on a représenté le masquage progressif du marqueur 3 par la diffusion, ci-dessus décrite, de la première substance 11. La figure 5a représente le marqueur 3 n'ayant subi aucune rupture de la chaîne du froid. La zone 50 d'alerte n'est pas masquée. Tous les éléments 4 du marqueur 3, à savoir les barres 4 du code à barres 3, sont visibles. Le marqueur 3 est donc susceptible d'activer l'automate 5 ci-dessus décrit. La figure 5b représente le marqueur 3 ayant subi une courte rupture de la chaîne du froid. La première substance 11 migre à la surface du marqueur 3, en recouvrant la zone d'alerte 50. Le marqueur 3 ne peut donc plus activer l'automate 5. La figure 5c représente le marqueur 3 ayant subi une rupture de la chaîne du froid prolongée. La première substance 11 poursuit sa migration à la surface du marqueur 3. Les éléments 4 du marqueur 3 sont petit à petit recouverts par la première substance 11, formant ainsi un écran entre le marqueur 3 et l'automate 5. La circulation du produit 1 ne peut donc plus s'opérer.

Sur les figures 6a, 6b on a représenté le masquage du marqueur 3 par la modification de la couleur du milieu 22. La figure 6a représente le marqueur 3 n'ayant subi aucune rupture de la chaîne du froid. Tous les éléments 4 du marqueur 3, à savoir les barres 4 du code à barres 3, sont visibles. Le marqueur 3 est donc susceptible d'activer l'automate 5 ci-dessus décrit. La figure 6b représente le marqueur 3 ayant subi une accumulation critique de ruptures de la chaîne du froid. Le milieu 22 ayant changé de couleur forme un écran à la surface du marqueur 3. Le marqueur 3 ne peut donc plus activer l'automate 5 permettant de la circulation du produit 1.

## Revendications

1. Procédé pour contrôler, de manière systématique et automatique, un produit (1) dont la conservation dans un circuit de distribution (2) dépend de la température, notamment un produit (1) soumis à une chaîne du froid ;
ledit procédé comprenant les étapes suivantes :
- l'étape d'apposer, sur ledit produit (1), un marqueur (3) comportant des éléments (4), notamment les barres d'un code-barres, destinés à être reconnus par des automates (5) gérant la circulation dudit produit (1) entre les acteurs économiques concernés, notamment entre un distributeur et un consommateur ou entre un laboratoire pharmaceutique et un hôpital,
- l'étape de fixer sur ledit produit (1) un composant (6) ; ledit composant (6) comportant au moins une partie (7) comprenant des moyens de masquage (8) destinés à masquer, au moins temporairement, sans les modifier, lesdits éléments (4) dudit marqueur (3) lorsque (i) la température dudit produit (1) franchit un seuil de température déterminée ou (ii) lorsque les conditions de conservation s'écartent d'un niveau de référence déterminé, notamment **caractérisé par** le franchissement d'un seuil de température déterminée pendant une durée supérieure à une durée déterminée ou par le franchissement d'une durée de conservation déterminée ;
de sorte que dans ces cas :
- lesdits automates (5) ne peuvent plus lire les marqueurs (3),
- mais un organisme de contrôle peut décider de rendre à nouveau lisible les marqueurs (3).

2. Procédé selon la revendication 1 ; ledit procédé étant tel que ladite partie (7) du composant (6) permettant de masquer au moins temporairement lesdits éléments (4) dudit marqueur (3) est réalisée sous une forme amovible ;
de sorte qu'en cas de masquage dudit marqueur (3) ledit organisme de contrôle peut décider de retirer ladite partie (7) amovible du composant (6) afin de rendre à nouveau lisible les marqueurs (3).

3. Procédé selon l'une quelconque des revendications 1 ou 2 ; ledit procédé étant tel que ledit composant (6) comporte une partie fixe (9) fixée de manière irréversible sur ledit produit (1) ; ladite partie fixe (9) fixée de manière irréversible comportant un témoin (10) des modifications des conditions de conservation, notamment un témoin (10) de rupture de la chaîne du froid ;
de sorte qu'en cas de modification des conditions de conservation les produits (1) concernés peuvent être identifiés sans contestation possible.

4. Procédé selon l'une quelconque des revendications 1 à 3 ; ledit procédé étant tel que, pour masquer lesdits éléments (4) dudit marqueur (3), on diffuse au dessus dudit marqueur (3), via une réaction physico-chimique migrante, une première substance (11) destinée à faire écran entre ledit marqueur (3) et lesdits automates (5).

5. Procédé selon l'une quelconque des revendications 1 à 4 ; ledit procédé étant tel que, pour masquer lesdits éléments (4) dudit marqueur (3), on modifie, via un développement contrôlé d'une population de micro-organismes au dessus dudit marqueur (3), une propriété optique d'une seconde substance (12) destinée à faire écran entre ledit marqueur (3) et lesdits automates (5) ; ledit développement contrôlé de ladite population de micro-organismes comprenant un processus d'activation ;
de sorte que, lorsque ledit processus d'activation est désactivé, la manutention à température ambiante du composant (6) n'induit pas ledit développement contrôlé de ladite population de micro-organismes.

6. Procédé selon la revendication 5 ; ladite population de micro-organismes étant placée sur un support de culture (13) ; ledit procédé comprenant en outre :
- l'étape d'inhiber ledit développement de ladite population de micro-organismes ;
de sorte que le développement de la population de micro-organismes est inhibé pendant les phases de manutention dudit support de culture (13) ;
ledit procédé comprenant en outre :
- l'étape de désinhiber la population de micro-organismes lors de la mise en circulation dudit produit (1) dans ledit circuit de distribution (2), notamment dans ladite chaîne du froid ;
de sorte que le développement de la population de micro-organismes devient possible.

7. Procédé selon la revendication 6 ; ledit procédé étant tel que :
- pour inhiber la population de micro-organismes, on la déshydrate,
- pour désinhiber la population de micro-organismes, on la réhydrate

8. Procédé selon la revendication 5 ; ladite population de micro-organismes étant placée sur un support de culture (13) ; ledit procédé comprenant en outre :
- l'étape de placer ladite population de micro-organismes dans un milieu de pH, notamment acide, inhibant ledit développement de ladite population de micro-organismes ;
de sorte que le développement de la population de micro-organismes est inhibé pendant les phases de manutention dudit support de culture (13) ;
ledit procédé comprenant en outre :
- l'étape d'ajuster le pH du milieu, notamment par libération d'eau ;
de sorte que le développement de la population de micro-organismes (16) devient possible après fixation dudit composant (6) sur ledit produit (1) à l'emplacement du marqueur (3).

9. Système pour contrôler, de manière systématique et automatique, un produit (1) dont la conservation dans un circuit de distribution (2) dépend de la température, notamment un produit (1) soumis à une chaîne du froid ;
ledit système comprenant :
- un marqueur (3), apposé sur ledit produit (1), comportant des éléments (4), notamment les barres d'un code-barres, destinés à être reconnus par des automates (5) gérant la circulation dudit produit (1) entre les acteurs économiques concernés, notamment entre un distributeur et un consommateur ou entre un laboratoire pharmaceutique et un hôpital,
- un composant (6),
- des moyens de fixation (14) pour fixer ledit composant (6) sur ledit produit (1) à l'emplacement dudit marqueur (3) ;
ledit composant (6) comportant au moins une partie (7) comprenant des moyens de masquage (8) destinés à masquer, au moins temporairement, sans les modifier, lesdits éléments (4) dudit marqueur (3) lorsque (i) la température dudit produit (1) franchit un seuil de température déterminée ou (ii) lorsque les conditions de conservation s'écartent d'un niveau de référence déterminé, notamment **caractérisé par** le franchissement d'un seuil de température déterminée pendant une durée supérieure à une durée déterminée ou par le franchissement d'une durée de conservation déterminée ;
de sorte que dans ces cas lesdits automates (5) ne peuvent plus lire les marqueurs (3) ;
de sorte qu'un organisme de contrôle peut décider de rendre à nouveau lisible les marqueurs (3).

10. Système selon la revendication 9 ; ledit système étant tel que lesdits moyens de fixation (14) fixent de manière amovible sur ledit produit (1) ladite partie (7) du composant (6) permettant de masquer au moins temporairement lesdits éléments (4) dudit marqueur (3) ;
de sorte qu'en cas de masquage dudit marqueur (3) ledit organisme de contrôle peut décider de retirer ladite partie (7) amovible du composant (6) afin de rendre à nouveau lisible les marqueurs (3).

11. Système selon l'une quelconque des revendications 9 ou 10 ; ledit système étant tel que ledit composant (6) comporte une partie fixe (9) fixée de manière irréversible sur ledit produit (1) ; ladite partie fixe (9) fixée de manière irréversible comportant un témoin (10) des modifications des conditions de conservation, notamment un témoin (10) de rupture de la chaîne du froid ;
de sorte qu'en cas de modification des conditions de conservation les produits (1) concernés peuvent être identifiés sans contestation possible.

12. Système selon l'une quelconque des revendications 9 à 11 ; ledit système étant tel que lesdits moyens de masquage (8) diffusent au dessus dudit marqueur (3), via une réaction physico-chimique migrante (15), une première substance (11) destinée à faire écran entre ledit marqueur (3) et lesdits automates (5).

13. Système selon l'une quelconque des revendications 9 à 12 ; ledit système étant tel que lesdits moyens de masquage (8) modifient, via un développement contrôlé d'une population de micro-organismes (16) au dessus dudit marqueur (3), une propriété optique d'une seconde substance (12) destinée à faire écran entre ledit marqueur (3) et lesdits automates (5) ; ledit développement contrôlé de ladite population de micro-organismes comprenant un processus d'activation ;
de sorte que, lorsque ledit processus d'activation est désactivé, la manutention à température ambiante du composant (6) n'induit pas ledit développement contrôlé de ladite population de micro-organismes.

14. Système selon la revendication 13 ; ladite population de micro-organismes étant placée sur un support de culture (13) ; ledit système comprenant en outre :
- des moyens d'inhibition pour inhiber ledit développement de ladite population de micro-organismes ;
de sorte que le développement de la population de micro-organismes est inhibé pendant les phases de manutention à température ambiante dudit support de culture (13) ;
ledit système comprenant en outre :
- des moyens de désinhibition pour désinhiber la population de micro-organismes lors de la mise en circulation dudit produit (1) dans ledit circuit de distribution (2), notamment dans ladite chaîne du froid ;
de sorte que le développement de la population de micro-organismes devient possible.

15. Système selon la revendication 14 ; ledit système étant tel que :
- les moyens d'inhibition pour inhiber la population de micro-organismes, comprennent des moyens de déshydratation,
- les moyens de désinhibition pour désinhiber la population de micro-organismes, comprennent des moyens de réhydratation.

16. Système selon la revendication 13 ; ladite population de micro-organismes étant placée sur un support de culture (13) ; ledit support de culture (13) étant situé dans une poche étanche (21) ; ladite poche contenant un milieu de culture (22) ; le pH dudit milieu de culture (22) étant choisi de manière appropriée, notamment acide, pour inhiber ledit développement de ladite population de micro-organismes ;
de sorte que le développement de la population de micro-organismes est inhibé pendant les phases de manutention dudit support de culture (13) ;
lesdits moyens de masquage (8) comprenant en outre des moyens d'ajustement pour ajuster le pH du milieu, notamment par libération d'eau ; lesdits moyens d'ajustement dudit pH se présentant notamment sous la forme d'une capsule perforable (24), contenant de l'eau, située à l'intérieur de ladite poche étanche (21) ;
de sorte que le développement de la population de micro-organismes (16) devient possible après fixation dudit composant (6) sur ledit produit (1) à l'emplacement du marqueur (3).

17. Composant (6) destiné au contrôle, systématique et automatique, d'un produit (1) dont la conservation dans un circuit de distribution (2) dépend de la température, notamment un produit (1) soumis à une chaîne du froid ; un marqueur (3) ayant été apposé sur ledit produit (1) ; ledit marqueur (3) comportant des éléments (4), notamment les barres d'un code-barres, destinés à être reconnus par des automates (5) gérant la circulation dudit produit (1) entre les acteurs économiques concernés, notamment entre un distributeur et un consommateur ou entre un laboratoire pharmaceutique et un hôpital ;
ledit composant (6) comprenant :
- des moyens de fixation (14) pour fixer ledit composant (6) sur ledit produit (1) à l'emplacement dudit marqueur (3) ;
- au moins une partie (7) comprenant des moyens de masquage (8) destinés à masquer, au moins temporairement, sans les modifier, lesdits éléments (4) dudit marqueur (3) lorsque (i) la température dudit produit (1) franchit un seuil de température déterminée ou (ii) lorsque les conditions de conservation s'écartent d'un niveau de référence déterminé, notamment **caractérisé par** le franchissement d'un seuil de température déterminée pendant une durée supérieure à une durée déterminée ou par le franchissement d'une durée de conservation déterminée ;
de sorte que dans ces cas lesdits automates (5) ne peuvent plus lire les marqueurs (3) ;
de sorte qu'un organisme de contrôle peut décider de rendre à nouveau lisible les marqueurs (3).

18. Composant (6) selon la revendication 17 ; ledit composant (6) étant tel que lesdits moyens de fixation (14) fixent de manière amovible sur ledit produit (1) ladite partie (7) du composant (6) permettant de masquer au moins temporairement lesdits éléments (4) dudit marqueur (3) ;
de sorte qu'en cas de masquage dudit marqueur (3) ledit organisme de contrôle peut décider de retirer ladite partie (7) amovible du composant (6) afin de rendre à nouveau lisible les marqueurs (3).

19. Composant (6) selon l'une quelconque des revendications 17 ou 18 ; ledit composant (6) comportant une partie fixe (9) fixée de manière irréversible sur ledit produit (1) ; ladite partie fixe (9) fixée de manière irréversible comportant un témoin (10) des modifications des conditions de conservation, notamment un témoin (10) de rupture de la chaîne du froid ;
de sorte qu'en cas de modification des conditions de conservation les produits (1) concernés peuvent être identifiés sans contestation possible.

20. Composant (6) selon l'une quelconque des revendications 17 à 19 ; ledit composant (6) étant tel que lesdits moyens de masquage (8) diffusent au dessus dudit marqueur (3), via une réaction physico-chimique migrante (15), une première substance (11) destinée à faire écran entre ledit marqueur (3) et lesdits automates (5).

21. Composant (6) selon l'une quelconque des revendications 17 à 19 ; ledit composant (6) étant tel que lesdits moyens de masquage (8) modifient, via un développement contrôlé d'une population de micro-organismes (16) au dessus dudit marqueur (3), une propriété optique d'une seconde substance (12) destinée à faire écran entre ledit marqueur (3) et lesdits automates (5) ; ledit développement contrôlé de ladite population de micro-organismes comprenant un processus d'activation ;
de sorte que, lorsque ledit processus d'activation est désactivé, la manutention à température ambiante du composant (6) n'induit pas ledit développement contrôlé de ladite population de micro-organismes.

22. Composant (6) selon la revendication 21 ; ladite population de micro-organismes étant placée sur un support de culture (13) ; ledit composant (6) comprenant en outre :
- des moyens d'inhibition pour inhiber ledit développement de ladite population de micro-organismes ;
de sorte que le développement de la population de micro-organismes est inhibé pendant les phases de manutention à température ambiante dudit support de culture (13) ;
ledit composant (6) comprenant en outre :
- des moyens de désinhibition pour désinhiber la population de micro-organismes lors de la mise en circulation dudit produit (1) dans ledit circuit de distribution (2), notamment dans ladite chaîne du froid ;
de sorte que le développement de la population de micro-organismes devient possible.

23. Composant (6) selon la revendication 22 ; ledit composant (6) étant tel que :
- les moyens d'inhibition pour inhiber la population de micro-organismes, comprennent des moyens de déshydratation,
- les moyens de désinhibition pour désinhiber la population de micro-organismes, comprennent des moyens de réhydratation.

24. Composant (6) selon la revendication 23 ; ladite population de micro-organismes étant placée sur un support de culture (13) ; ledit support de culture (13) étant situé dans une poche étanche (21) ; ladite poche contenant un milieu de culture (22) ; le pH dudit milieu de culture (22) étant choisi de manière appropriée, notamment acide, pour inhiber ledit développement de ladite population de micro-organismes ;
de sorte que le développement de la population de micro-organismes est inhibé pendant les phases de manutention dudit support de culture (13) ;
lesdits moyens de masquage (8) comprenant en outre des moyens d'ajustement pour ajuster le pH du milieu, notamment par libération d'eau ; lesdits moyens d'ajustement dudit pH se présentant notamment sous la forme d'une capsule perforable (24), contenant de l'eau, située à l'intérieur de ladite poche étanche (21) ;
de sorte que le développement de la population de micro-organismes (16) devient possible après fixation dudit composant (6) sur ledit produit (1) à l'emplacement du marqueur (3).

## Claims

1. Process for systematically and automatically inspecting a product (1) of which the preservation in a distribution circuit (2) is dependent on the temperature, in particular a product (1) subjected to a cold chain;
wherein said process includes the following steps:
- a step of affixing, on said product (1), a marker (3) comprising elements (4), in particular the bars of a bar code, intended to be recognized by automata (5) managing the circulation of said product (1) between the economic actors concerned, in particular between a distributor and a consumer or a pharmaceutical laboratory and a hospital,
- a step of attaching a component (6) on said product (1), wherein said component (6) comprises at least one portion (7) including masking means (8) intended to mask, at least temporarily, said elements (4) of said marker (3), without modifying them, when (i) the temperature of said product (1) exceeds a predetermined temperature threshold or (ii) when the preservation conditions deviate from a predetermined reference level, in particular **characterized by** the exceeding of a predetermined temperature threshold for a time period greater than a predetermined time period or by the exceeding of a predetermined preservation time;
so that, in these cases:
- said automata (5) can no longer read the markers (3),
- but an inspecting body can decide to make the markers (3) legible again.

2. Process according to claim 1, in which said portion (7) of the component (6) enabling said elements (4) of said marker (3) to be at least temporarily masked is produced in a removable form;
so that, if said marker (3) is masked, said inspecting body can decide to remove said removable portion (7) of the component (6) in order to make the markers (3) legible again.

3. Process according to either one of claims 1 or 2, in which said component (6) comprises a fixed portion (9) irreversibly attached on said product (1) said irreversibly attached fixed portion (9) comprises an indicator (10) of modifications to the preservation conditions, in particular an indicator (10) of a cold chain failure;
so that, if the preservation conditions are modified, the products (1) concerned can be identified without possible dispute.

4. Process according to any one of claims 1 to 3, in which, in order to mask said elements (4) of said marker (3), a first substance (11) intended to form a screen between said marker (3) and said automata (5) is distributed above said marker (3) via a physicochemical migration reaction.

5. Process according to any one of claims 1 to 4, in which, in order to mask said elements (4) of said marker (3), an optical property of a second substance (12) intended to form a screen between said marker (3) and said automata (5) is modified, via controlled development of a microorganism population above said marker (3); said controlled development of said microorganism population includes an activation process;
so that, when said activation process is deactivated, the handling of the component (6) at room temperature does not cause said controlled development of said microorganism population.

6. Process according to claim 5, in which said microorganism population is placed on a culture medium (13); said process also includes:
- a step of inhibiting said development of said microorganism population;
so that the development of the microorganism population is inhibited during the phases in which said culture medium (13) is handled;
said process also includes:
- a step of disinhibiting the microorganism population when said product (1) is circulated in said distribution circuit (2), in particular in said cold chain;
so that the development of the microorganism population becomes possible.

7. Process according to claim 6, in which:
- to inhibit the microorganism population, it is dehydrated;
- to disinhibit the microorganism population, it is rehydrated.

8. Process according to claim 5, in which said microorganism population is placed on a culture medium (13); said process also includes:
- a step of placing said microorganism population in a pH medium, in particular acid, inhibiting said development of said microorganism population;
so that the development of the microorganism population is inhibited during the phases of handling of said culture medium (13);
said process also includes:
- a step of adjusting the pH of the medium, in particular by releasing water;
so that the development of the microorganism population (16) becomes possible after attachment of said component (6) on said product (1) in the location of the marker (3).

9. System for systematically and automatically inspecting a product (1) of which the preservation in a distribution circuit (2) is dependent on the temperature, in particular a product (1) subjected to a cold chain;
wherein said system includes the following steps:
- a marker (3), affixed on said product (1), comprising elements (4), in particular the bars of a bar code, intended to be recognized by automata (5) managing the circulation of said product (1) between the economic actors concerned, in particular between a distributor and a consumer or a pharmaceutical laboratory and a hospital,
- a component (6),
- attachment means (14) for attaching said component (6) on said product (1) in the location of said marker (3);
wherein said component (6) comprises at least one portion (7) including masking means (8) intended to mask, at least temporarily, said elements (4) of said marker (3), without modifying them, when (i) the temperature of said product (1) exceeds a predetermined temperature threshold or (ii) when the preservation conditions deviate from a predetermined reference level, in particular **characterized by** the exceeding of a predetermined temperature threshold for a time period greater than a predetermined time period or by the exceeding of a predetermined preservation time;
so that, in these cases, said automata (5) can no longer read the markers (3),
so that an inspecting body can decide to make the markers (3) legible again.

10. System according to claim 9, in which said attachment means (14) removable attach, on said product (1) said portion (7) of the component (6) enabling said elements (4) of said marker (3) to be at least temporarily masked;
so that, if said marker (3) is masked, said inspecting body can decide to remove said removable portion (7) of the component (6) in order to make the markers (3) legible again.

11. System according to either one of claims 9 or 10, in which said component (6) comprises a fixed portion (9) irreversibly attached on said product (1) said irreversibly attached fixed portion (9) comprises an indicator (10) of modifications to the preservation conditions, in particular an indicator (10) of a cold chain failure;
so that, if the preservation conditions are modified, the products (1) concerned can be identified without possible dispute.

12. System according to any one of claims 9 to 11, in which said masking means (8) distribute, above said marker (3), via a physicochemical migration reaction (15), a first substance (11) intended to form a screen between said marker (3) and said automata (5).

13. System according to any one of claims 9 to 12, in which, said masking means (8) modify, via controlled development of a microorganism population (16) above said marker (3), an optical property of a second substance (12) intended to form a screen between said marker (3) and said automata (5); said controlled development of said microorganism population includes an activation process;
so that, when said activation process is deactivated, the handling of the component (6) at room temperature does not cause said controlled development of said microorganism population.

14. System according to claim 13, in which said microorganism population is placed on a culture medium (13); said system also includes:
- inhibition means for inhibiting said development of said microorganism population;
so that the development of the microorganism population is inhibited during the phases in which said culture medium (13) is handled;
said system also includes:
- disinhibition means for disinhibiting the microorganism population when said product (1) is circulated in said distribution circuit (2), in particular in said cold chain;
so that the development of the microorganism population becomes possible.

15. System according to claim 14, in which:
- the inhibition means for inhibiting the microorganism population include dehydration means;
- the disinhibition means for disinhibiting the microorganism population include rehydration means.

16. System according to claim 13, in which said microorganism population is placed on a culture medium (13); said culture medium (13) is located in a sealed pouch (21); said pouch contains a culture medium (22); the pH of said culture medium (22) is appropriately chosen, in particular acid, in order to inhibit said development of said microorganism population;
so that the development of the microorganism population is inhibited during phases in which said culture medium (13) is handled;
said masking means (8) also include adjustment means for adjusting the pH of the medium, in particular by releasing water; said means for adjusting said pH are in particular in the form of a penetrable capsule (24), containing water, located inside said sealed pouch (21);
so that the development of the microorganism population (16) becomes possible after said component (6) is attached on said product (1) in the location of the marker (3).

17. Component (6) intended for systematically and automatically inspecting a product (1) of which the preservation in a distribution circuit (2) is dependent on the temperature, in particular a product (1) subjected to a cold chain; wherein a marker (3) has been affixed on said product (1); said marker (3) comprises elements (4), in particular the bars of a bar code, intended to be recognized by automata (5) managing the circulation of said product (1) between the economic actors concerned, in particular between a distributor and a consumer or a pharmaceutical laboratory and a hospital;
said component (6) includes:
- attachment means (14) for attaching said component (6) on said product (1) in the location of said marker (3);
- at least one portion (7) including masking means (8) intended to mask, at least temporarily, said elements (4) of said marker (3), without modifying them, when (i) the temperature of said product (1) exceeds a predetermined temperature threshold or (ii) when the preservation conditions deviate from a predetermined reference level, in particular **characterized by** the exceeding of a predetermined temperature threshold for a time period greater than a predetermined time period or by the exceeding of a predetermined preservation time;
so that, in these cases, said automata (5) can no longer read the markers (3),
so that an inspecting body can decide to make the markers (3) legible again.

18. Component (6) according to claim 17, said component (6) being such that said attachment means (14) fix by removable means on said product (1) said portion (7) of the component (6) enabling said elements (4) of said marker (3) to be at least temporarily masked;
so that, if said marker (3) is masked, said inspecting body can decide to remove said removable portion (7) of the component (6) in order to make the markers (3) legible again.

19. Component (6) according to either one of claims 17 or 18, in which said component (6) comprises a fixed portion (9) irreversibly attached on said product (1) said irreversibly attached fixed portion (9) comprises an indicator (10) of modifications to the preservation conditions, in particular an indicator (10) of a cold chain failure;
so that, if the preservation conditions are modified, the products (1) concerned can be identified without possible dispute.

20. Component (6) according to any one of claims 17 to 19, said component (6) being such that said masking means (8) distribute above said marker (3), via a physicochemical migration reaction (15), a first substance (11) intended to form a screen between said marker (3) and said automata (5).

21. Component (6) according to any one of claims 17 to 19, said component (6) being such that said masking means (8) modify, via controlled development of a microorganism population (16) above said marker (3), an optical property of a second substance (12) intended to form a screen between said marker (3) and said automata (5); said controlled development of said microorganism population includes an activation process;
so that, when said activation process is deactivated, the handling of the component (6) at room temperature does not cause said controlled development of said microorganism population.

22. Component (6) according to claim 21, in which said microorganism population is placed on a culture medium (13); said component (6) also includes:
- inhibition means for inhibiting said development of said microorganism population;
so that the development of the microorganism population is inhibited during the phases in which said culture medium (13) is handled;
said component (6) also includes:
- disinhibition means for disinhibiting the microorganism population when said product (1) is circulated in said distribution circuit (2), in particular in said cold chain;
so that the development of the microorganism population becomes possible.

23. Component (6) according to claim 22, said component (6) being such that:
- the inhibition means for inhibiting the microorganism population include dehydration means;
- the disinhibition means for disinhibiting the microorganism population include rehydration means.

24. Component (6) according to claim 23, in which said microorganism population is placed on a culture medium (13); said culture medium (13) is located in a sealed pouch (21); said pouch contains a culture medium (22); the pH of said culture medium (22) is appropriately chosen, in particular acid, in order to inhibit said development of said microorganism population;
so that the development of the microorganism population is inhibited during phases in which said culture medium (13) is handled;
said masking means (8) also include adjustment means for adjusting the pH of the medium, in particular by releasing water; said means for adjusting said pH are in particular in the form of a penetrable capsule (24), containing water, located inside said sealed pouch (21);
so that the development of the microorganism population (16) becomes possible after said component (6) is attached on said product (1) in the location of the marker (3).

## Patentansprüche

1. Verfahren zur systematischen und automatischen Kontrolle eines Produktes (1), dessen Haltbarkeit in einem Verteilungskreislauf (2) temperaturabhängig ist, insbesondere ein Produkt (1), welches einer Kältekette unterworfen ist;
wobei das Verfahren die folgenden Schritte umfasst:
- Anbringen auf das besagte Produkt (1) eines Markers (3), der Elemente (4) umfasst, insbesondere die Striche eines Strichcodes, die von Automaten (5) erkannt werden sollen, welche den Umlauf des besagten Produktes (1) zwischen den betroffenen wirtschaftlichen Instanzen steuert, insbesondere zwischen einem Verteiler und einem Verbraucher oder zwischen einem pharmazeutischen Labor und einem Krankenhaus,
- Anbringen einer Komponente (6) auf das Produkt (1), wobei die besagte Komponente (6) mindestens ein Teil (7) aufweist, das über Mittel zum Maskieren (8) verfügt, welche zumindest vorübergehend die besagten Elemente (4) des besagten Markers (3) maskieren sollen, ohne sie zu verändern, wenn (i) die Temperatur des besagten Produktes (1) einen vorgegebenen Temperaturschwellenwert überschreitet oder (ii), wenn die Haltbarkeitsbedingungen von einem vorgegebenen Referenzniveau abweichen, insbesondere **gekennzeichnet durch** das Überschreiten eines vorgegebenen Temperaturschwellenwertes während einer Zeitdauer, die länger als eine vorgegebene Zeitdauer ist, oder **durch** das Überschreiten einer vorgegebenen Haltbarkeitszeit; so dass in diesem Falle:
- die besagten Automaten (5) nicht mehr in der Lage sind, die Marker (3) zu lesen,
- wobei jedoch ein Kontrollorganismus die Entscheidung treffen kann, die Lesbarkeit der Marker (3) wiederherzustellen.

2. Verfahren nach Anspruch 1, wobei das besagte Verfahren derart gestaltet ist, dass das besagte Teil (7) der Komponente (6), welches das zumindest zeitweise Maskieren der besagten Elemente (4) des besagten Markers (3) ermöglicht, abnehmbar gestaltet ist, so dass im Falle der Maskierung des besagten Markers (3), der besagte Kontrollorganismus die Entscheidung treffen kann, das besagte abnehmbare Teil (7) der Komponente (6) zu entfernen, um die Lesbarkeit der Marker (3) wiederherzustellen.

3. Verfahren nach einem der Ansprüche 1 oder 2, wobei das besagte Verfahren derart gestaltet ist, dass die besagte Komponente (6) ein feststehendes Teil (9) umfasst, das in unumkehrbarer Weise an das besagte Produkt (1) befestigt ist, wobei das besagte feststehende Teil (9), welches in unumkehrbarer Weise befestigt ist, über eine Warnanzeige (10) der Änderungen der Haltbarkeitsbedingungen verfügt, insbesondere eine Warnanzeige (10) für das Unterbrechen der Kältekette,
so dass im Falle der Änderung der Haltbarkeitsbedingungen, die betroffenen Produkte (1) ohne möglichen Widerspruch identifiziert werden können.

4. Verfahren nach einem der Ansprüche 1 bis 3, wobei das besagte Verfahren derart gestaltet ist, dass man, zum Maskieren der besagten Elemente (4) des besagten Markers (3), oberhalb des besagten Markers (3) einen ersten Stoff (11) mittels einer wandernden physikalisch-chemischen Reaktion zerstreut, der die Rolle einer Abschirmung zwischen dem besagten Marker (3) und den besagten Automaten (5) spielt.

5. Verfahren nach einem der Ansprüche 1 bis 4, wobei das besagte Verfahren derart gestaltet ist, dass man, um die besagten Elemente (4) des besagten Markers (3) zu maskieren, über eine kontrollierte Entwicklung einer Population von Mikroorganismen oberhalb des besagten Markers (3), eine optische Eigenschaft eines zweiten Stoffes (12) ändert, der als Abschirmung zwischen dem besagten Marker (3) und den besagten Automaten (5) wirken soll, wobei die besagte kontrollierte Entwicklung der besagten Population von Mikroorganismen einen Aktivierungsprozess aufweist,
so dass wenn der besagte Aktivierungsprozess deaktiviert wird, die Handhabung der Komponente (6) bei Raumtemperatur die besagte kontrollierte Entwicklung der besagten Population von Mikroorganismen nicht herbeiführt.

6. Verfahren nach Anspruch 5, wobei die besagte Population von Mikroorganismen auf einem Kulturträger (13) aufgebracht ist und wobei das besagte Verfahren darüber hinaus folgendes aufweist:
- einen Schritt zum Hemmen der besagten Entwicklung der besagten Population von Mikroorganismen;
so dass die Entwicklung der Population von Mikroorganismen während der Handhabungsphasen des besagten Kulturträgers (13) gehemmt ist;
wobei das besagte Verfahren darüber hinaus folgendes aufweist:
- einen Schritt zum Enthemmen der Population von Mikroorganismen, wenn das besagte Produkt (1) in den besagten Verteilerkreislauf (2) und insbesondere in die Kältekette eingefügt wird;
so dass die Entwicklung der Population von Mikroorganismen ermöglicht wird.

7. Verfahren nach Anspruch 6, wobei das besagte Verfahren derart gestaltet ist, dass:
- zum Hemmen der Population von Mikroorganismen, diese dehydratiert wird,
- zum Enthemmen der Population von Mikroorganismen, diese wieder hydratiert wird.

8. Verfahren nach Anspruch 7, wobei die besagte Population von Mikroorganismen auf einem Kulturträger (13) aufgebracht wird, wobei das besagte Verfahren darüber hinaus folgendes aufweist:
- einen Schritt zum Einbringen der besagten Population von Mikroorganismen in ein Milieu mit insbesondere saurem pH-Wert, der die besagte Entwicklung der besagten Population von Mikroorganismen hemmt,
so dass die Entwicklung der Population von Mikroorganismen während der Handhabungsphasen des besagten Kulturträgers (13) gehemmt ist,
wobei das besagte Verfahren darüber hinaus folgendes aufweist:
- einen Schritt zum Einstellen des pH-Wertes des Milieus, insbesondere durch Freisetzung von Wasser;
so dass die Entwicklung der Population von Mikroorganismen (16) nach dem Befestigen der besagten Komponente (6) auf dem besagten Produkt (1) an der Stelle des Markers (3) möglich wird.

9. System zur systematischen und automatischen Kontrolle eines Produktes (1), dessen Haltbarkeit in einem Verteilungskreislauf (2) temperaturabhängig ist, insbesondere ein Produkt (1), welches einer Kältekette unterworfen ist;
wobei das System folgendes umfasst:
- einen an das besagte Produkt (1) angebrachten Marker (3), der die Elemente (4) umfasst, insbesondere die Striche eines Strichcodes, die von Automaten (5) erkannt werden sollen, welche den Umlauf des besagten Produktes (1) zwischen den betroffenen wirtschaftlichen Instanzen steuert, insbesondere zwischen einem Verteiler und einem Verbraucher oder zwischen einem pharmazeutischen Labor und einem Krankenhaus,
- eine Komponente (6)
- Befestigungsmittel (14) zum befestigen der besagten Komponente (6) an dem besagten Produkt (1) an der Stelle des besagten Markers (3);
wobei die besagte Komponente (6) mindestens ein Teil (7) aufweist, das über Mittel zum Maskieren (8) verfügt, welche zumindest vorübergehend die besagten Elemente (4) des besagten Markers (3) maskieren sollen, ohne sie zu verändern, wenn (i) die Temperatur des besagten Produktes (1) einen vorgegebenen Temperaturschwellenwert überschreitet oder (ii), wenn die Haltbarkeitsbedingungen von einem vorgegebenen Referenzniveau abweichen, insbesondere **gekennzeichnet durch** das Überschreiten eines vorgegebenen Temperaturschwellenwertes während einer Zeitdauer, die länger als eine vorgegebene Zeitdauer ist, oder **durch** das Überschreiten einer vorgegebenen Haltbarkeitszeit;
so dass die besagten Automaten (5) nicht mehr in der Lage sind, die Marker (3) zu lesen,
so dass ein Kontrollorganismus die Entscheidung treffen kann, die Lesbarkeit der Marker (3) wiederherzustellen.

10. System nach Anspruch 9, wobei das besagte System derart gestaltet ist, dass die besagten Befestigungsmittel (14) auf das besagte Produkt (1) in nicht abnehmbarer Weise das besagte Teil (7) der Komponente (6) befestigen, welche es ermöglicht, zumindest vorübergehend, die besagten Elemente (4) des besagten Markers (3) zu maskieren,
so dass im Falle des Maskierens des besagten Markers (3), der besagte Kontrollorganismus die Entscheidung treffen kann, das besagte abnehmbare Teil (7) von der Komponente (6) zu entfernen, um die Lesbarkeit der Marker (3) wiederherzustellen.

11. System nach einem der Ansprüche 9 oder 10, wobei das besagte System derart gestaltet ist, dass die besagte Komponente (6) ein feststehendes Teil (9) umfasst, das in unumkehrbarer Weise an das besagte Produkt (1) befestigt ist, wobei das besagte feststehende Teil (9), welches in unumkehrbarer Weise befestigt ist, über eine Warnanzeige (10) der Änderungen der Haltbarkeitsbedingungen verfügt, insbesondere eine Warnanzeige (10) für das Unterbrechen der Kältekette,
so dass im Falle der Änderung der Haltbarkeitsbedingungen, die betroffenen Produkte (1) ohne möglichen Widerspruch identifiziert werden können.

12. System nach einem der Ansprüche 9 bis 11, wobei das besagte System derart gestaltet ist, dass die besagten Mittel zum Maskieren (8) oberhalb des besagten Markers (3) einen ersten Stoff (11) mittels einer wandernden physikalisch-chemischen Reaktion (15) zerstreuen, der die Rolle einer Abschirmung zwischen dem besagten Marker (3) und den besagten Automaten (5) spielt.

13. System nach einem der Ansprüche 9 bis 12, wobei das besagte System derart gestaltet ist, dass die besagten Mittel zum Maskieren (8) über eine kontrollierte Entwicklung einer Population von Mikroorganismen (16) oberhalb des besagten Markers (3), eine optische Eigenschaft eines zweiten Stoffes (12) ändern, der als Abschirmung zwischen dem besagten Marker (3) und den besagten Automaten (5) wirken soll, wobei die besagte kontrollierte Entwicklung der besagten Population von Mikroorganismen einen Aktivierungsprozess aufweist,
so dass, wenn der besagte Aktivierungsprozess deaktiviert wird, die Handhabung der Komponente (6) bei Raumtemperatur die besagte kontrollierte Entwicklung der besagten Population von Mikroorganismen nicht herbeiführt.

14. System nach Anspruch 13, wobei die besagte Population von Mikroorganismen auf einem Kulturträger (13) aufgebracht ist und wobei das besagte Verfahren darüber hinaus folgendes aufweist:
- Hemmungsmittel zum Hemmen der besagten Entwicklung der besagten Population von Mikroorganismen;
so dass die Entwicklung der Population von Mikroorganismen während der Handhabungsphasen des besagten Kulturträgers (13) bei Umgebungstemperatur gehemmt ist;
wobei das besagte System darüber hinaus folgendes aufweist:
- Enthemmungsmittel zum Enthemmen der Population von Mikroorganismen, wenn das besagte Produkt (1) in den besagten Verteilerkreislauf (2) und insbesondere in die besagte Kältekette eingefügt wird;
so dass die Entwicklung der Population von Mikroorganismen ermöglicht wird.

15. System nach Anspruch 14, wobei das besagte System derart gestaltet ist, dass:
- die Hemmungsmittel zum Hemmen der Population von Mikroorganismen, über Mittel zum Dehydrieren verfügen,
- die Enthemmungsmittel zum Enthemmen der Population von Mikroorganismen, über Mittel zum erneuten Hydrieren verfügen.

16. System nach Anspruch 13, wobei die besagte Population von Mikroorganismen auf einem Kulturträger (13) aufgebracht wird, wobei der besagte Kulturträger (13) sich in einer wasserdichten Tasche (21) befindet, wobei die besagte Tasche ein Kulturmedium (22) enthält, wobei der pH-Wert des besagten Kulturmediums (22) in geeigneter Weise, insbesondere sauer, gewählt wird, um die besagte Entwicklung der besagten Population von Mikroorganismen zu hemmen,
so dass die Entwicklung der Population von Mikroorganismen während der Handhabungsphasen des besagten Kulturträgers (13) gehemmt ist,
wobei die besagten Mittel zum Maskieren (8) darüber hinaus über Einstellungsmittel zum Einstellen des pH-Wertes des Milieus verfügen, insbesondere durch Freisetzung von Wasser, wobei die besagten Mittel zum Einstellen des besagten pH-Wertes insbesondere die Form einer Wasser enthaltenden Kapsel (24) aufweisen, die durchstochen werden kann und sich innerhalb der besagten wasserdichten Tasche (21) befindet,
so dass die Entwicklung der Population von Mikroorganismen (16) nach dem Befestigen der besagten Komponente (6) auf dem besagten Produkt (1) an der Stelle des Markers (3) möglich wird.

17. Komponente (6) zur systematischen und automatischen Kontrolle eines Produktes (1), dessen Haltbarkeit in einem Verteilungskreislauf (2) temperaturabhängig ist, insbesondere ein Produkt (1), welches einer Kältekette unterworfen ist, wobei ein Marker (3) am besagten Produkt (1) angebracht wurde, wobei der besagte Marker (3) Elemente (4) umfasst, insbesondere die Striche eines Strichcodes, die von Automaten (5) erkannt werden sollen, welche den Umlauf des besagten Produktes (1) zwischen den betroffenen wirtschaftlichen Instanzen steuert, insbesondere zwischen einem Verteiler und einem Verbraucher oder zwischen einem pharmazeutischen Labor und einem Krankenhaus,
wobei die besagte Komponente (6) folgendes aufweist:
- Befestigungsmittel (14) zum Befestigen der besagten Komponente (6) an dem besagten Produkt (1) an der Stelle des besagten Markers (3);
- mindestens ein Teil (7), das über Mittel zum Maskieren (8) verfügt, welche zumindest vorübergehend die besagten Elemente (4) des besagten Markers (3) maskieren sollen, ohne sie zu verändern, wenn (i) die Temperatur des besagten Produktes (1) einen vorgegebenen Temperaturschwellenwert überschreitet oder (ii), wenn die Haltbarkeitsbedingungen von einem vorgegebenen Referenzniveau abweichen, insbesondere **gekennzeichnet durch** das Überschreiten eines vorgegebenen Temperaturschwellenwertes während einer Zeitdauer, die länger als eine vorgegebene Zeitdauer ist oder **durch** das Überschreiten einer vorgegebenen Haltbarkeitszeit;
so dass in diesem Falle die besagten Automaten (5) nicht mehr in der Lage sind, die Marker (3) zu lesen,
so dass ein Kontrollorganismus die Entscheidung treffen kann, die Lesbarkeit der Marker (3) wiederherzustellen.

18. Komponente (6) nach Anspruch 17, wobei die besagte Komponente (6) derart gestaltet ist, dass die besagten Befestigungsmittel (14) auf das besagte Produkt (1) in nicht abnehmbarer Weise das besagte Teil (7) der Komponente (6) befestigen, welche es ermöglicht, zumindest vorübergehend, die besagten Elemente (4) des besagten Marker (3) zu maskieren,
so dass im Falle des Maskierens des besagten Markers (3), der besagte Kontrollorganismus die Entscheidung treffen kann, das besagte abnehmbare Teil (7) von der Komponente (6) zu entfernen, um die Lesbarkeit der Marker (3) wiederherzustellen.

19. Komponente (6) nach einem der Ansprüche 17 oder 18, wobei die besagte Komponente (6) ein feststehendes Teil (9) umfasst, das in unumkehrbarer Weise an das besagte Produkt (1) befestigt ist, wobei das besagte feststehende Teil (9), welches in unumkehrbarer Weise befestigt ist, über eine Warnanzeige (10) der Änderungen der Haltbarkeitsbedingungen, insbesondere eine Warnanzeige (10) für das Unterbrechen der Kältekette verfügt,
so dass im Falle der Änderung der Haltbarkeitsbedingungen, die betroffenen Produkte (1) ohne möglichen Widerspruch identifiziert werden können.

20. Komponente (6) nach einem der Ansprüche 17 bis 19, wobei die besagte Komponente (6) derart gestaltet ist, dass die besagten Mittel zum Maskieren (8) oberhalb des besagten Markers (3) einen ersten Stoff (11) mittels einer wandernden physikalisch-chemischen Reaktion (15) zerstreuen, der die Rolle einer Abschirmung zwischen dem besagten Marker (3) und den besagten Automaten (5) spielt.

21. Komponente (6) nach einem der Ansprüche 17 bis 19, wobei die besagte Komponente (6) derart gestaltet ist, dass die besagten Mittel zum Maskieren (8) über eine kontrollierte Entwicklung einer Population von Mikroorganismen (16) oberhalb des besagten Markers (3), eine optische Eigenschaft eines zweiten Stoffes (12) ändern, der als Abschirmung zwischen dem besagten Marker (3) und den besagten Automaten (5) wirken soll, wobei die besagte kontrollierte Entwicklung der besagten Population von Mikroorganismen einen Aktivierungsprozess aufweist,
so dass, wenn der besagte Aktivierungsprozess deaktiviert wird, die Handhabung der Komponente (6) bei Raumtemperatur die besagte kontrollierte Entwicklung der besagten Population von Mikroorganismen nicht herbeiführt.

22. Komponente (6) nach Anspruch 21, wobei die besagte Population von Mikroorganismen auf einem Kulturträger (13) aufgebracht ist und wobei die besagte Komponente (6) darüber hinaus folgendes aufweist:
- Hemmungsmittel zum Hemmen der besagten Entwicklung der besagten Population von Mikroorganismen;
so dass die Entwicklung der Population von Mikroorganismen während der Handhabungsphasen des besagten Kulturträgers (13) bei Umgebungstemperatur
gehemmt ist;
wobei die besagte Komponente (6) darüber hinaus folgendes aufweist:
- Enthemmungsmittel zum Enthemmen der Population von Mikroorganismen, wenn das besagte Produkt (1) in den besagten Verteilerkreislauf (2) und insbesondere in die Kältekette eingefügt wird;
so dass die Entwicklung der Population von Mikroorganismen ermöglicht wird.

23. Komponente (6) nach Anspruch 22, wobei die besagte Komponente (6) derart gestaltet ist, dass:
- die Hemmungsmittel zum Hemmen der Population von Mikroorganismen, über Mittel zum Dehydrieren verfügen,
- die Enthemmungsmittel zum Enthemmen der Population von Mikroorganismen, über Mittel zum erneuten Hydrieren verfügen.

24. Komponente (6) nach Anspruch 23, wobei die besagte Population von Mikroorganismen auf einem Kulturträger (13) aufgebracht ist, wobei der besagte Kulturträger sich in einer wasserdichten Tasche (21) befindet, wobei die besagte Tasche ein Kulturmedium (22) enthält, wobei der pH-Wert des besagten Kulturmediums (22) in geeigneter Weise, insbesondere sauer, gewählt wird, um die besagte Entwicklung der besagten Population von Mikroorganismen zu hemmen,
so dass die Entwicklung der Population von Mikroorganismen während der Handhabungsphasen des Kulturträgers (13) gehemmt ist,
wobei die besagten Mittel zum Maskieren (8) darüber hinaus über Einstellungsmittel zum Einstellen des pH-Wertes des Milieus verfügen, insbesondere durch Freisetzung von Wasser, wobei die besagten Mittel zum Einstellen des pH-Wertes insbesondere in Form einer durchstechungsfähigen Kapsel (24) auftreten, die Wasser enthält und sich innerhalb der besagten wasserdichten Tasche (21) befindet,
so dass die Entwicklung der Population von Mikroorganismen (16) nach dem Befestigen der besagten Komponente (6) auf dem besagten Produkt (1) an der Stelle des Markers (3) möglich wird.
